# EUROPÄISCHE PATENTANMELDUNG

(11) **EP 0 924 441 A1**
(43) Veröffentlichungstag der Anmeldung: **23.06.1999**
(21) Anmeldenummer: 98122313.4
(22) Anmeldetag: 24.11.1998
(51) Int. Cl.: F16C 11/06

(54) **Kugelgelenk und Verfahren zu seiner Vorspannung**

(30) Priorität: 20.12.1997 DE 19756984
(71) Anmelder: DaimlerChrysler AG, 70567 Stuttgart (DE)
(72) Erfinder: von Ey, Peter, 20355 Hamburg (DE); Reese, Eckhard, 21641 Apensen (DE)

(57) **Zusammenfassung**

Kugelgelenk, insbesondere für Teile der Lenkung oder Radaufhängung von Kraftfahrzeugen, mit einer einen Kugelkopf (3) eines Gelenkzapfens (7) innenseitig aufnehmenden Lagerschale (2), welche in einem Gehäuse (1) abgestützt ist, und einem auf der Lagerschale (2) außenseitig aufliegenden Verschlußelement (4), mittels dessen die Lagerschale (2) bezüglich des Gehäuses (1) und des Kugelkopfes (3) vorspannbar ist, wobei das Verschlußelement (4) unter Beaufschlagung der Lagerschale (2) am Gehäuse (1) in einer axialen Vorspannrichtung verschieblich führbar und in einer beliebigen, einer einzustellenden Vorspannung entsprechenden Position fixierbar ist.

## Beschreibung

Die vorliegende Erfindung betrifft ein Kugelgelenk, inbesondere für Teile der Lenkung oder Radaufhängung von Kraftfahrzeugen, mit den Merkmalen des Oberbegriffs des Patentanspruches 1, sowie ein Verfahren zu seiner Vorspannung mit den Merkmalen des Oberbegriffs des Patentanspruchs 16.

Moderne Kugelgelenke für den Einsatz in der Kraftfahrzeugtechnik müssen sich durch ein definiertes Reibmoment bei gleichzeitig hoher Gelenksteifigkeit auszeichnen. Diese Anforderungen werden erfüllt durch Vorsehen einer bestimmten Vorspannkraft des Kugelkopfes in Zapfenachsrichtung innerhalb eines montierten Gelenks. Diese Vorspannkraft wird in der Regel durch einen konstruktiv bedingten Vorspannweg aufgebracht, indem durch Bördeln gegen einen Anschlag das Gelenk verschlossen wird. Ein derartiges Bördelverfahren ist beispielsweise aus der DE 42 11 897 A1 bekannt. Aufgrund von Toleranzen der Abmaße der Einzelteile unterliegt dieser Vorspannweg, und somit die hierdurch verursachte Vorspannkraft, jedoch Streuungen, wodurch die Qualität der Gelenke stark beeinträchtigt ist.

Aufgabe der Erfindung ist daher die Schaffung eines Kugelgelenks, bei welchem eine Vorspannung des Kugelkopfes bezüglich seiner Lagerung in einfacher Weise mit einer geforderten Genauigkeit einstellbar ist.

Diese Aufgabe wird gelöst durch ein Kugelgelenk mit den Merkmalen des Patentanspruches 1, sowie durch ein Verfahren mit den Merkmalen des Patentanspruches 16.

Erfindungsgemäß ist es nun möglich, die Vorspannung weitgehend unabhängig von den Abmaßen und Toleranzen der Einzelteile einzustellen und während der Montage dauerhaft zu fixieren. Hierdurch können die Einzeltoleranzen erheblich aufgeweitet werden, womit eine wesentlich kostengünstigere Fertigung der Einzelteile ermöglicht wird. Da die Wirkung der Toleranzen auf das Kugelgelenk stark reduziert wird, kann die Qualität der gefertigten Kugelgelenke in einfacher Weise verbessert werden. Die Vorspannung des Kugelgelenks kann hierbei weitgehend unabhängig von den Abmaßen der Einzelteile unmittelbar über die auf das Verschlußelement des Kugelgelenks aufgebrachte Vorspannkraft eingestellt werden.

Vorteilhafte Ausführungsformen der Erfindung sind Gegenstand der Unteransprüche.

Nach einer bevorzugten Ausgestaltung sind das Verschlußelement und die Lagerschale und/oder die Lagerschale und das Gehäuse mit einander gegenüberliegenden, komplementären konusartigen Abschnitten ausgebildet. Durch diese konusartige bzw. winklige Ausbildung komplementärer Abschnitte der Kugelschale und des Verschlußelementes bzw. der Kugelschale und des Gehäuses wird eine in Achszapfrichtung bzw. axialer Richtung wirkende Vorspannkraft auf das Verschlußelement in die hierzu senkrechte radiale Richtung umgeleitet, so daß zusätzlich zur axialen Vorspannung auch die radiale Lage des Kugelkopfes festgelegt wird. Hierdurch ist es möglich, zusätzlich zu axialen auch radiale Toleranzen der Bauteile auszugleichen, so daß diese radiale Toleranzen aufgeweitet werden können, womit eine kostengünstigere Fertigung möglich ist. Durch die Kraftumlenkung ist also eine Herstellung von Gelenken mit verbesserter Qualität möglich, da die Einflüsse radialer Toleranzen durch das axiale Verschließen beeinflußbar sind.

Zweckmäßigerweise sind die komplementären, konusartigen Abschnitte von Verschlußelement und Gehäuse und/oder Lagerschale und Gehäuse mit leicht unterschiedlichem Konizitätswinkeln ausgebildet. Hierdurch ist einerseits gewährleistet, daß der Anlagebereich zwischen Verschlußelement und Lagerschale möglichst nahe am Gelenkzapfen liegt, und andererseits daß eine optimale Verteilung der Vorspannkraft auf die gesamte Lagerschale möglich ist.

Bevorzugt ist, daß im Bereich des äquatorialen Durchmessers des Kugelkopfes das Gehäuse und die Lagerschale mit einander gegenüberliegenden, komplementären zylindrischen Abschnitten ausgebildet sind

Zweckmäßigerweise ist hierbei zwischen diesen zylindrischen Abschnitten ein radiales Spiel ausgebildet. Dieses Spiel kann zur radialen Festlegung der Lagerschale bei Einwirkung einer axialen Kraft ausgenutzt werden. Ferner erleichtert es während der Montage die axiale Einführung der Lagerschale in das Gehäuse.

Gemäß einer bevorzgten Ausgestaltung sind das Verschlußelement und die Lagerschale und/oder die Lagerschale und das Gehäuse mit einander gegenüberliegenden, komplementären, im wesentlichen kugelschalenförmigen Abschnitten ausgebildet.

Besonders bevorzugt ist hierbei, das die kugelschalenförmigen Abschnitte mit unterschiedlichen Krümmungsradien ausgebildet sind. Hierdurch sind die Toleranzanforderungen an Gehäuse und Lagerschale relativ niedrig, da eine Lagerschale mit einem etwas kleineren Krümmungsradius durch axiale bzw. radiale Vorspannung optimal an einen größeren Krümmungsradius des Gehäuses angepaßt werden kann.

Zweckmäßigerweise ist die Lagerschale im Bereich ihres äquatorialen Durchmessers innenseitig mit einer ringförmigen Aussparung ausgebildet.Hierdurch sind die Toleranzanforderungen an Kugelkopf und Lagerschale gegenüber herkömmlichen Systemen verringert. Ferner kann der Verschleiß des Kugelgelenks in diesem Bereich günstig beeinflußt werden.

Bevorzugt ist ferner, daß die Lagerschale in ihrem Bodenbereich innenseitig mit einer Aussparung ausgebildet ist. Bei axialer Beaufschlagung der Lagerschale über das konisch ausgebildete Verschlußelement ist es unter Ausnutzung der ringförmigen Ausnehmung und dieser Ausnehmung im Bodenbereich möglich, im wesentlichen eine Dreipunktauflage des Kugelkopfes in der Lagerschale zu erzielen. Hierdurch kann der Verschleiß des Kugelgelenks verringert werden.

Zweckmäßigerweise ist die Lagerschale in einem dem Gelenkzapfen zugekehrten Bereich mit einer Anzahl von Schlitzen ausgebildet, wodurch die Montage des Gelenks erleichtert ist.

Es wird bevorzugt, daß die Lagerschale mit einem dem Gehäuse zugewandten vorstehenden Bereich ausgebildet ist, der in einen komplementär geformten Bereich des Gehäuses eingreift. Hiermit kann die Lage der Lagerschale innerhalb des Gehäuses in einfacher und zuverlässiger Weise fixiert werden.

Gemäß einer bevorzugten Ausgestaltung der Erfindung ist zwischen Verschlußelement und Gehäuse in Vorspannrichtung ein Spiel vorgesehen, wobei das Verschlußelement zur Festlegung der Gelenkvorspannung unter Ausnutzung des Spiels am Gehäuse verschieblich führbar und an einer beliebigen, der einzustellenden Vorspannung entsprechenden Position fixierbar ist. Hierdurch ist in einfacher Weise ein Bereich vorgebbar, innerhalb dessen eine Einstellung der Vorspannkraft möglich ist.

Zweckmäßigerweise ist das Verschlußelement mittels Schweißens, insbesondere Laserschweißens am Gehäuse fixierbar. Die Fixierung mittels Laserschweißen ist gegenüber herkömmlichen Fixierverfahren in sehr einfacher und preiswerter Weise durchzuführen. Die Fixierung mittels Laserschweißens reduziert ferner den benötigten Bauraum und ermöglicht somit eine raumsparende Konstruktion.

Gemäß einer weiteren vorteilhaften Ausgestaltung ist das Verschlußelement mittels Verformung des Gehäuses, insbesondere mittels Zusammendrückens der Gehäusewände senkrecht zur axialen Vorspannrichtung, am Gehäuse fixierbar. Hier bieten sich verschiedene Verfahren zur Verformung des Gehäuses an. Beispielsweise ist es möglich, die Gehäusewände mittels Bolzen, die mit einer für die Verformung ausreichenden Kraft an mehreren Stellen des Umfangs auf die Gehäusewand gestoßen werden, zu erzielen. Hierdurch erreicht man eine geringe plastische Verformung des Gehäuses bei gleichzeitiger Verbindung des Gehäuses mit dem Verschlußelement. Es ist ebenfalls möglich, die Fixierung mittels eines Bördelwerkzeuges durchzuführen, welches beispielsweise durch Bewegung in Vorspannrichtung die Gehäusewand seitlich an das Verschlußelement anpreßt und so dauerhaft fixiert. Es ist ferner möglich, die Fixierung mittels Spannbacken durchzuführen, die mit ausreichender Kraft das Gehäuse an das Verschlußelement pressen. Das Gehäuse wird hierbei in nur geringem Maße plastisch verformt.

Zweckmäßigerweise ist das Verschlußelement an seiner äußeren Umfangsfläche und/oder der hiermit zusammenwirkende Innenwandbereich des Gehäuses mit sägezahnartigen oder dreieckförmigen Nuten bzw. Vorsprüngen ausgebildet. Hierdurch ist beim Zusammendrücken der Gehäusewand eine formschlüssige Verbindung von Gehäuse und Verschlußdeckel erzielbar. Durch die Nuten bzw. Vorsprünge wird gewährleistet, daß sich das Verschlußelement nicht im Durchmesser verändert, da die Nutspitzen hohen Kräften nachgeben können.

In der Zeichnung sind bevorzugte Ausführungsbeispiele der Erfindung im einzelnen darstellt.

Es zeigt
Figur 1 einen Längsschnitt durch eine erste Ausführungsform des erfindungsgemäßen Kugelgelenks,
Figur 2 einen Längsschnitt durch eine zweite Ausführungsform des erfindungsgemäßen Kugelgelenks,
Figur 3 einen Längsschnitt durch eine dritte Ausführungsform des erfindungsgemäßen Kugelgelenks,
Figur 4 einen Längsschnitt durch eine vierte Ausführungsform des erfindungsgemäßen Kugelgelenks,
Figur 5-7 Längsschnitte durch eine fünfte Ausführungsform des erfindungsgemäßen Kugelgelenks, wobei hier zusätzlich schematisch Mittel zur Verklemmung des Verschlußelements im Öffnungsbereich des Gelenkgehäuses dargestellt sind, und
Figur 8 eine Draufsicht auf den Gegenstand der Figur 7.

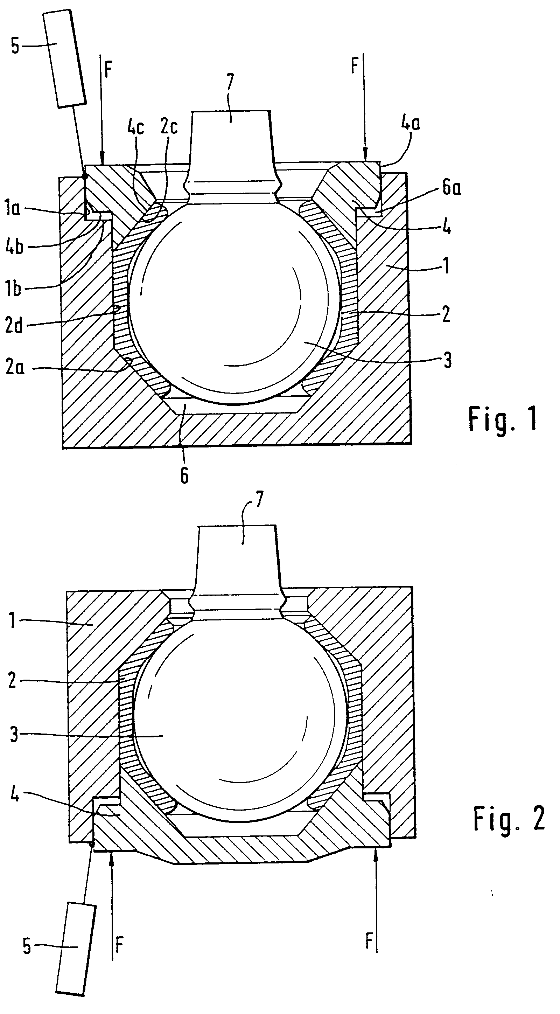

Zunächst unter Bezugnahme auf Figur 1 wird das erfindungsgemäße Kugelgelenk im einzelnen beschrieben. Das Gelenk besteht im wesentlichen aus einem Gehäuse 1, einer in einer Ausnehmung 6 des Gehäuses 1 aufgenommenen Lagerschale 2, einem Gelenkzapfen 7 mit Kugelkopf 3 und einem Verschlußelement 4. Übliche Dichtungsvorrichtungen, insbesondere Dichtungsbalge, sind für die vorliegende Erfindung nicht von Bedeutung und daher nicht dargestellt. Die Lagerschale 2 weist an ihrem dem Boden der Ausnehmung 6 des Gehäuses zugekehrten Wandbereich eine zu diesem Wandbereich komplementäre konische Verjüngung 2a auf. Anschließend an diesen Bereich 2a weist die Lagerschale 2 außen als Wandbereich einen mittleren, zylindrischen Abschnitt 2d sowie einen sich hieran anschließenden weiteren konisch sich verjüngenden oberen Abschnitt 2c auf.

Komplementär zu diesem oberen Abschnitt 2c der Lagerschale 2 ist ein Verschlußelement 4 ausgebildet. Das Verschlußelement 4 liegt mit einer konisch ausgebildeten Fläche 4c auf dem oberen konischen Abschnitt 2c der Lagerschale 2 auf.

Das Verschlußelement 4 ist in Zapfenachsrichtung, d.h. in den dargestellten Ausführungsbeispielen in Richtung der in Figur 1 dargestellten Pfeile F, verschieblich in das Gehäuse 1 einsetzbar. Die Gehäuseausnehmung 6 weist hierbei einen oberen, mit einem vergrößerten Durchmesser ausgebildeten Bereich 6a auf. An der Innenwand 1a dieses Bereiches 6a ist das Verschlußelement 4 mit seiner äußeren Wandung 4a verschieblich geführt. Das Gehäuse 1 ist ferner mit einer Schulter 1b ausgebildet, durch welche die Verschiebbarkeit des Verschlußelements 4 begrenzt ist. Zwischen dem Schulterbereich 1b und einer diesem Bereich gegenüberliegenden Wandung 4b des Verschlußelements 4 ist ein Spiel vorgesehen. Die Verschiebbarkeit des Verschlußelements 4 relativ zum Gehäuse ist daher durch die Größe dieses Spiels bestimmt.

Erfindungsgemäß ist es nun möglich, die im Kugelgelenk einzustellende Vorspannkraft über die in Zapfenachsrichtung gleichmäßig auf das Verschlußelement 4 aufgebrachte Kraft F zu realisieren. Die Richtung der Kraft F ist in den Figuren durch die bereits erwähnten Pfeile dargestellt. Dabei ist darauf zu achten, daß das Verschlußelement bzw. der Verschlußring 4 im Bereich der angestrebten Vorspannkraft nicht mit dem Gehäuse, im dargestellten Ausführungsbeispiel also dem Schulterbereich 1b, zum Anschlag kommt. Durch Wahl der Höhe des Schulterbereichs 1b und des sich somit ergebenden Spiels zwischen diesem Schulterbereich 1b und der unteren Fläche 4b des Verschlußelements ist ein einstellbarer Vorspannkraftbereich definierbar. Über das Verschlußelement 4 wirkt die Vorspannkraft F auf die Lagerschale 2 und somit den Kugelkopf 3.

Ist durch die Einwirkung der Vorspannkraft F die einer gewünschten Vorspannung entsprechende Positionierung des Verschlußelements erreicht, wird diese Position unter Beibehaltung der Vorspannkraft F mittels Schweißens, insbesondere mittels Laserschweißens, dauerhaft fixiert. Die Verschweißung des Verschlußelements 4 erfolgt beispielsweise mit einer schematisch dargestellten Laserschweißvorrichtung 5.

Durch das beschriebene Verfahren wird die gleichmäßig auf das Verschlußelement 4 aufgebrachte Kraft F auf die Lagerschale 2 und den Kugelkopf 3 übertragen, wodurch die gewünschte Vorspannkraft im Kugelgelenk einstellbar ist. Miteinander korrespondierende Durchmesserabmessungen von Kugelkopf 3, Lagerschale 2 und Gehäuse 1 sind hierbei derart aufeinander abgestimmt, daß die Lagerschale 2 zwischen dem Kugelkopf und dem Gehäuse 1 bzw. dem Verschlußelement 4 mit einer ein gewünschtes Reibmoment bestimmenden Vorspannung gehalten ist, die vorzugsweise derart gewählt ist, daß der lediglich andeutungsweise dargestellte Gelenkzapfen 7 ohne Losbrechmoment verschwenkbar ist. Die Toleranzanforderungen an die einzelnen Bauteile sind hierbei wegen der kraftbezogenen Realisierung der Vorspannung wesentlich geringer als bei herkömmlichen Kugelgelenken.

Das Verfahren ist grundsätzlich auf alle Kugelgelenke anwendbar, bei denen ein Verschlußelement in Zapfenachsrichtung in dem Gehäuse fixiert werden soll.

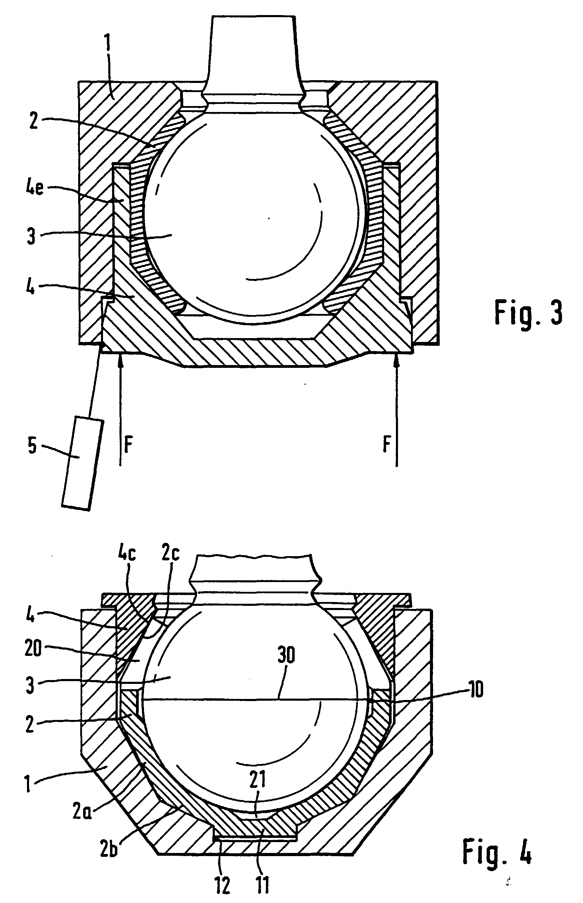

Die in den Figuren 2 und 3 dargestellten Ausführungsformen entsprechen im wesentlichen der bereits beschriebenen, in Figur 1 dargestellten Ausführungsform. Gleiche Bauteile sind hier mit gleichen Bezugszeichen bezeichnet.

Die Ausführungsform der Figur 2 unterscheidet sich von derjenigen der Figur 1 dadurch, daß das Verschlußelement 4 auf der dem Gelenkzapfen 7 entgegengesetzten Seite des Gelenks angeordnet ist. Ferner ist das Verschlußelement 4 deckelförmig ausgebildet.

Bei der in Figur 3 dargestellten Ausführungsform weist das Verschlußelement 4 eine ringförmige Verlängerung 4e auf, welche sich in einem Bereich zwischen dem Gehäuse 1 und der Lagerschale 2 erstreckt. Auch hier ist das Verschlußelement 4 auf der dem Gelenkzapfen 7 gegenüberliegenden Seite des Gelenks deckelförmig ausgebildet.

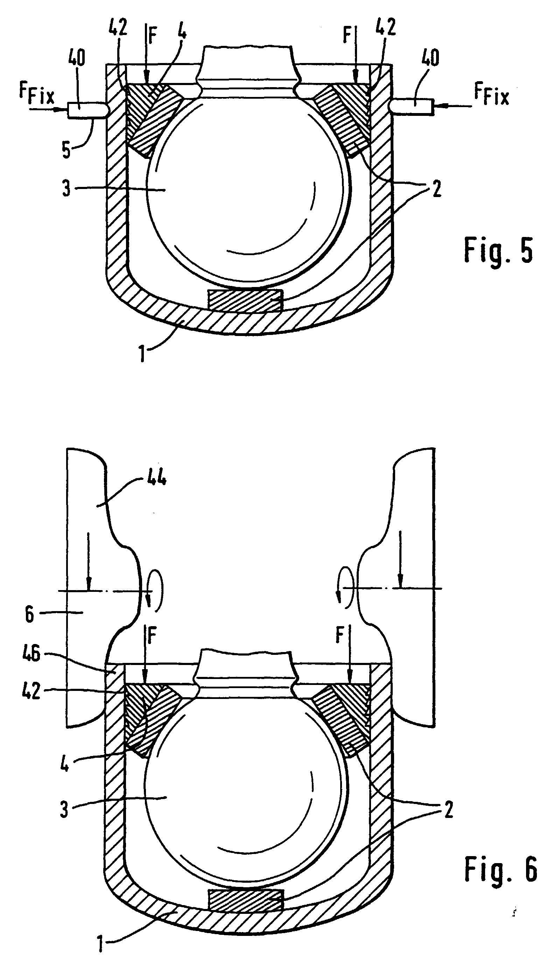

Nicht nur an die axialen, sondern auch an die radialen Toleranzen sind bei den erfindungsgemäßen Kugelgelenken geringere Anforderungen gestellt. Die sei anhand der Ausführungsform gemäß Figur 4 im einzelnen erläutert. Auch hier sind gleiche Teile mit gleichen Bezugszeichen versehen.

Mittels der konischen Anlageflächen von Verschlußelement 4 und Lagerschale 2 bzw. Lagerschale 2 und Gehäuse 1 erfährt eine axial wirkende Vorspannkraft eine Umlenkung in die radiale Richtung, so daß auch die radiale Position des Kugelkopfes 3 bzw. der Lagerschale 2 innerhalb des Gehäuses 1 festgelegt wird. Durch eine entsprechende Gestaltung der Bauteile können die üblicherweise strengen Anforderungen an die radiale Toleranzkette vermindert werden.

Die Lagerschale 2 ist außenseitig mit zwei unteren, sich aneinander anschließenden konischen Bereichen 2a, 2b mit unterschiedlichen Konizitätswinkeln ausgebildet, welche an komplementär geformten Abschnitten des Gehäuses 1 anliegen. Hierbei weisen die einander jeweils gegenüberliegenden Abschnitte von Lagerschale und Gehäuse leicht unterschiedliche Neigungs- bzw. Konizitätswinkel auf, wie dies für den Bereich 2a in der Figur 4 explizit dargestellt ist. Durch Vorsehen dieses Winkelspiels zwischen Gehäuse 1 und Lagerschale 2 ist die Einführung der Lagerschale 2 in das Gehäuse während der Montage vereinfacht. Ferner können auch hier aufgrund der axial und radial wirkenden Vorspannung größere Bauteiltoleranzen in Kauf genommen werden. Auch die komplementären konischen Auflageflächen 4c, 2c von Verschlußelement 4 und Lagerschale 2 sind mit leicht unterschiedlichen Konizitätswinkeln ausgebildet, wodurch auch hier größere Bauteiltoleranzen möglich sind.

Es sei angemerkt, daß die konischen Bereiche 2a,2b der Lagerschale und die komplementären Bereiche des Gehäuses durch kugelschalenförmige Bereiche ersetzt werden können. Hierbei ist darauf zu achten, daß der Kugelradius der Lagerschale 2 etwas kleiner ist als der komplementäre Bereich des Gehäuses, so daß auch bei dieser Ausführung die oben beschriebenen Vorteile bezüglich Montage und Bauteiltoleranzen erzielbar sind.

Zur Fixierung am Gehäuse 1 ist die Lagerschale 2 mit einem vorstehenden Bereich 11 ausgebildet, der in eine komplementär geformte Ausnehmung 12 des Gehäuses 1 eingreift. Ferner ist die Lagerschale zur Vereinfachung der Montage des Kugelkopfes im oberen Bereich gleichmäßig über den Umfang an einigen Stellen mit Schlitzen 20 ausgebildet.

Gemäß dem dargestellten Ausführungsbeispiel weist die Lagerschale 2 innenseitig im Bereich des äquatorialen Durchmessers 30 des Kugelkopfes eine ringförmige Ausnehmung 10, sowie in ihrem Bodenbereich eine weitere Ausnehmung 21 auf. Bei Vorspannung der Lagerschale 2 ist hierdurch gewährleistet, daß der Kugekkopf in diesen Ausnehmungsbereichen nicht auf der Lagerschale aufliegt, wodurch der Verschleiß vermindert werden kann.

In den Figuren 5 bis 8 sind schematisch verschiedene Verfahren zur Festlegung bzw. Verklemmung des Verschlußelemets 4 am Gehäuse 1 dargestellt. Auch hier sind gleiche Bauteile mit gleiche Bezugszeichen versehen.

Das Verklemmen dient zur Fixierung einer Position des Verschlußelements 4, welche der gewünschten Vorspannung im Kugelgelenk entspricht. So wird, wie bereits erläutert, der Vorspannweg nicht in Abhängigkeit von den geometrischen Maßen der Bauteile, sondern von der gewählten Vorspannkraft realisiert.

In Figur 5 erfolgt die Fixierung mittels Bolzen 40, die mit einer ausreichenden Kraft F_{Fix} an mehreren Stellen des Umfangs der Wand des Gehäuses 1 gegen diese gedrückt bzw gestoßen werden. Hierdurch wird eine geringe plastische Verformung des Gehäuses 1 bewirkt, welche zu einer Fixierung der Lageschale 2 am Gehäuse 1 führt. Die Ausbildung des Verschlußelements mit dreiecksförmigen Nuten 42 ermöglicht hierbei eine formschlüssige Verbindung von Gehäuse und Verschlußelement. Durch die Nuten 42 wird ferner gewährleistet, daß sich das Verschlußelement in seinem Durchmesser nicht verändert, da die Nutspitzen hohen Kräften nachgeben können.

Figur 6 zeigt eine Fixierung mittels eines Bördelwerkzeugs 44, welches von oben kommend die Gehäusewand seitlich an das Verschlußelement 4 anpreßt und so dauerhaft fixiert. Das dargestellte Bördelwekzeug 44 ist derart ausgebildet, daß der Fixierung ein axiales Verschließen des Kugelgelenks mittels Umbördelung der oberen Abschnitte 46 der Gehäusewand folgen kann. Auch hier erfolgt durch die geometriche Ausgestaltung des Verschlußelements 4 eine formschlüssige Verbindung.

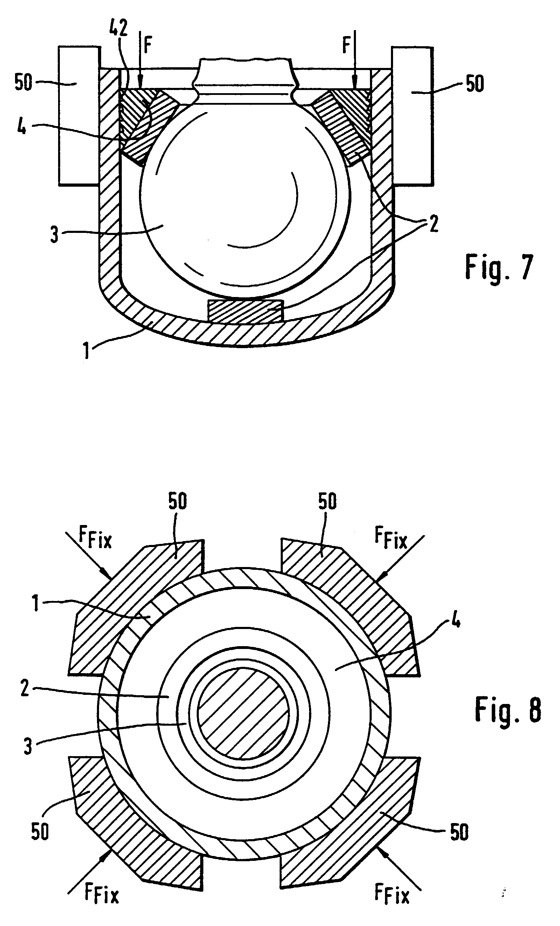

Gemäß Figur 7 erfolgt die Fixierung mittels Spannbacken 50, die das Gehäuse 1 an das Verschlußelement pressen. In Figur 8 ist eine Draufsicht auf das Kugelgelenk gemäß Figur 7 dargestellt. Beispielhaft sind vier Spannbacken 50 vorgesehen. Das Gehäuse wird hierbei durch Einwirkung von Kräften F_{Fix} über die Spannbacken 50 plastisch verformt und aufgrund der Nuten am Verschlußelement formschlüssig mit diesem verbunden.

Sind hohe Auszugskräfte gefordert, so ist ein nachträgliches Bördeln von Vorteil. Dabei ist darauf zu achten, daß die Lage des Verschlußelements 4 durch den Bördelvorgang nicht weiter verändert wird.

## Patentansprüche

1. Kugelgelenk, insbesondere für Teile der Lenkung oder Radaufhängung von Kraftfahrzeugen, mit einer einen Kugelkopf (3) eines Gelenkzapfens (7) innenseitig aufnehmenden Lagerschale (2), welche in einem Gehäuse (1) abgestützt ist, und einem auf der Lagerschale (2) außenseitig aufliegenden Verschlußelement (4), mittels dessen die Lagerschale (2) bezüglich des Gehäuses (1) und des Kugelkopfes (3) vorspannbar ist,
**dadurch gekennzeichnet,** daß
das Verschlußelement (4) unter Beaufschlagung der Lagerschale (2) am Gehäuse (1) in einer axialen Vorspannrichtung verschieblich führbar und in einer beliebigen, einer einzustellenden Vorspannung entsprechenden Position fixierbar ist.

2. Kugelgelenk nach Anspruch 1, dadurch gekennzeichnet, daß das Verschlußelement (4) und die Lagerschale (2) und/oder die Lagerschale (2) und das Gehäuse (1) mit einander gegenüberliegenden komplementären, konusartigen Abschnitten ausgebildet sind.

3. Kugelgelenk nach einem der vorstehenden Ansprüche, dadurch gekennzeichnet, daß die komplementären, konusartigen Abschnitte von Verschlußelement (4) und Lagerschale (2) und/oder von Lagerschale (2) und Gehäuse (1) mit unterschiedlichen Konizitätswinkeln ausgebildet sind.

4. Kugelgelenk nach einem der Ansprüche 1 bis 3, dadurch gekennzeichnet, daß im Bereich des äquatorialen Durchmessers (30) des Kugelkopfes (3) das Gehäuse (1) und die Lagerschale (2) mit einander gegenüberliegenden komplementären zylindrischen Abschnitten ausgebildet sind.

5. Kugelgelenk nach Anspruch 4, dadurch gekennzeichnet, daß zwischen den einander gegenüberliegenden zylindrischen Abschnitten von Gehäuse(1) und Lagerschale (2) ein radiales Spiel ausgebildet ist.

6. Kugelgelenk nach Anspruch 1, dadurch gekennzeichnet, daß das Verschlußelement (4) und die Lagerschale (2) und/oder die Lagerschale (2) und das Gehäuse (1) mit einander gegenüberliegenden komplementären, im wesentlichen kugelschalenförmigen Abschnitten ausgebildet sind.

7. Kugelgelenk nach Anspruch 6, dadurch gekennzeichnet, daß die kugelschalenförmigen Abschnitte mit unterschiedlichen Krümmungsradien ausgebildet sind.

8. Kugelgelenk nach einem der vorstehenden Ansprüche, dadurch gekennzeichnet, daß die Lagerschale (2) im Bereich ihres äquatorialen Durchmessers innenseitig mit einer ringförmigen Aussparung (10) ausgebildet ist.

9. Kugelgelenk nach einem der vorstehenden Ansprüche, dadurch gekennzeichnet, daß die Lagerschale (2) in ihrem Bodenbereich innenseitig mit einer Aussparung (21) ausgebildet ist.

10. Kugelgelenk nach einem der vorstehenden Ansprüche, dadurch gekennzeichnet, daß die Lagerschale (2) in einem dem Gelenkzapfen (7) zugekehrten Bereich mit einer Anzahl von Schlitzen (20) ausgebildet ist.

11. Kugelgelenk nach einem der vorstehenden Ansprüche, dadurch gekennzeichnet, daß die Lagerschale mit einem dem Gehäuse (1) zugewandten vorstehenden Bereich (11) ausgebildet ist, der in einen komplementär geformten Bereich (12) des Gehäuses (1) eingreift.

12. Kugelgelenk nach einem der vorstehenden Ansprüche, dadurch gekennzeichnet, daß zwischen dem Verschlußelement (4) und dem Gehäuse (1) in Vorspannrichtung ein Spiel vorgesehen ist, wobei das Verschlußelement (4) zur Festlegung der Gelenkvorspannung unter Ausnutzung des Spiels am Gehäuse (1) verschieblich führbar und an einer beliebigen, der einzustellenden Vorspannung entsprechenden Position fixierbar ist.

13. Kugelgelenk nach einem der vorstehenden Ansprüche, dadurch gekennzeichnet, daß das Verschlußelement (4) mittels Schweißens, insbesondere Laserschweißens am Gehäuse (1) fixierbar ist.

14. Kugelgelenk nach einem der vorstehenden Ansprüche, dadurch gekennzeichnet, daß das Verschlußelement (4) mittels Verformung des Gehäuses (1), insbesondere mittels Zusammendrückens der Gehäusewände senkrecht zur Vorspannrichtung, am Gehäuse (1) fixierbar ist.

15. Kugelgelenk nach einem der vorstehenden Ansprüche, dadurch gekennzeichnet, daß das Verschlußelement (4) an seiner äußeren Umfangsfläche und/oder der hiermit zusammenwirkende Innenwandbereich des Gehäuses (1) mit sägezahnartigen oder dreiecksförmigen Nuten bzw. Vorsprüngen (42) ausgebildet ist.

16. Verfahren zum Vorspannen eines Kugelgelenks mit einer einen Kugelkopf (3) eines Gelenkzapfens innenseitig aufnehmenden Lagerschale (2), welche in einem Gehäuse (1) abgestützt ist, und einem auf der Lagerschale (2) außenseitig aufliegenden Verschlußelement (4),
gekennzeichnet durch folgende Schritte:
- Beaufschlagung des Verschlußelements (4) mit einer Vorspannkraft (F) zur Einstellung einer Gelenkvorspannung,
- Festlegung der Vorspannung durch Fixieren des Verschlußelements (4) am Gehäuse (1) an einer beliebigen, der einzustellenden Vorspannung entsprechenden Position.

17. Verfahren nach Anspruch 15, dadurch gekennzeichnet, daß die Vorspannung unter Ausnutzung eines in Richtung der Vorspannkraft (F) vorgesehenen Spiels zwischen Verschlußelement (4) und Gehäuse (1) eingestellt wird.

18. Verfahren nach einem der Ansprüche 15 oder 16, dadurch gekennzeichnet, daß die Fixierung des Verschlußelements (4) am Gehäuse (1) mittels Schweißens, insbesondere Laserschweißens, durchgeführt wird.

19. Verfahren nach einem der vorstehenden Ansprüche 15 bis 17, dadurch gekennzeichnet, daß die Fixierung des Verschlußelements (4) am Gehäuse (1) mittels Verformung des Gehäuses (1), insbesondere mittels Zusammendrückens der Gehäusewände senkrecht zur Vorspannrichtung, durchgeführt wird.
